Europäisches Patentamt

European Patent Office

Office européen des brevets

(19)

(11) Publication number: **0 116 114**
A2

(12) **EUROPEAN PATENT APPLICATION**

(21) Application number: **83109192.1**

(22) Date of filing: **16.09.83**

(51) Int. Cl.³: **C 11 B 3/16**
**C 11 B 7/00, C 11 B 13/00**
**C 11 C 1/08, C 11 C 1/00**

(30) Priority: **10.01.83 US 456705**

(43) Date of publication of application:
**22.08.84 Bulletin 84/34**

(84) Designated Contracting States:
**AT DE GB NL SE**

(71) Applicant: **Union Camp Corporation**
**1600 Valley Road**
**Wayne New Jersey 07470(US)**

(72) Inventor: **Przytycki, Jacob**
**113 Talbot Road**
**Savannah Georgia 31410(US)**

(72) Inventor: **Fritz, Earle**
**10 East 65th Street**
**Savannah Georgia 31405(US)**

(74) Representative: **von Füner, Alexander, Dr. et al,**
**Patentanwälte v. Füner, Ebbinghaus, Finck Mariahilfplatz**
**2 & 3**
**D-8000 München 90(DE)**

(54) Process for purifying fatty acids, naturally occurring fats and oils and fatty esters.

(57) The disclosure is of a process for purifying fatty acids, naturally occurring fats and fatty oils, or fatty esters by crystallizing the mixtures and expressing them.

FIG.1

EP 0 116 114 A2

PROCESS FOR PURIFYING FATTY ACIDS, NATURALLY
OCCURRING FATS AND OILS AND FATTY ESTERS

BACKGROUND OF THE INVENTION

Field of the Invention

The invention relates to processes for purifying fatty
acids, fats, fatty oils or fatty esters, such as those obtained
from animal fats, vegetable oils, and crude tall oil and their
distillation fractions.

Brief Description of the Prior Art

Fatty acids, fats, fatty oils, or fatty esters are chiefly
composed of saturated and unsaturated carboxylic acids and generally contain greater or lesser amounts of "unsaponifiable neutral
materials". These "unsaponifiable neutral materials" comprise
alcohols, aldehydes, ketones, and differing hydrocarbons of
varying types. Some of these unsaponifiable materials are
naturally occurring and some are decomposition products resulting
from heat treatments of the acids, fats, oils, or esters. They
are, however, impurities and their presence causes difficulties
in refining and utilizing the acids, esters, fats or oils.

Separation of the fatty acids or esters from the impurities
by vacuum distillation is generally impractical. This is because
a large part of the unsaponifiable neutral materials boil in the
same range as the acids or esters they contaminate.

In the prior art, purification of the fatty acid has been
achieved by dissolving the contaminated fatty acid in a

-1-

hydrocarbon solvent and then crystallizing, filtering and solvent washing the filter cake. The process requires high energy consumption and may result in hydrocarbon air emissions. These facts are of course undesirable.

In the past fatty acids have been purified by the so-called "panning and pressing" method. In this method the melted fatty acids were cascaded into rectangular aluminum trays, which were stacked in racks in cold storage rooms. Cooling took place very slowly to assure the formation of large and well defined crystals. The solidified cakes of fatty acids were removed from the trays, wrapped in burlap or cotton cloths and placed in vertical hydraulic presses. Pressure was applied slowly and the solid fatty acids were separated from liquid fatty acids and unsaponifiable materials. This method is not economical because it is throughput limiting and labor intensive.

I have discovered a simple and economical method of purifying fatty acids, fats, fatty oils, or fatty esters by separating solid fatty acids, fats, fatty oils, or fatty esters from liquid fatty acids, fatty oils, fats, fatty esters and unsaponifiable neutral materials. The method is based on the pressure expression of the solidified fatty acids, fats, fatty oils or fatty esters. The solidified fatty acids, fats, fatty oils or fatty esters may be crystalline in nature, but an advantage of the process of the invention resides in its independence from crystallization conditions, temperatures or crystal sizes.

## SUMMARY OF THE INVENTION

The invention comprises a method of separating unsaponifiable neutral contaminants and liquid fatty acids, fats, fatty oils, or fatty esters from solid fatty acids, fats, fatty oils or fatty esters, which comprises;

adjusting the contaminant containing fatty acid, fat, fatty oil or fatty ester to a temperature at which the contaminant is a liquid and the fatty acid, fat, fatty oil or fatty ester is in a solid form; and

expressing the resulting two phase mixture;

whereby the contaminants are separated in the filtrate and the purified fatty acid, fat, fatty oil or fatty ester is obtained in the solid extract.

## BRIEF DESCRIPTION OF THE DRAWINGS

Figure 1 is a view-in-perspective of apparatus employed to carry out the method of the invention.

Figures 2-6 are cross-sectioned, side elevations of a tube-type of press filter advantageously employed in the method of the invention.

## DETAILED DESCRIPTION OF THE PREFERRED EMBODIMENTS OF THE INVENTION

Fatty acids are a well-known class of aliphatic, monocarboxylic acids. They are generally obtained as mixtures and are naturally occurring in vegetable and animal fats. Many of the naturally occurring fatty acids occur as glycerides (esters) in natural fats and oils and are derived from such sources. Examples of natural fats and oils from which fatty acids and their esters may be obtained are the vegetable fats or oils such as coconut oil, rapeseed oil, soy bean oil, olive oil, tall oil and the like. Animal fats include beef fat, particularly tallow, and hog fat. Marine fats include those obtained from whale oil, menhaden oil, codliver oil and herring oil.

The process of the invention may be employed to separate unsaponified neutral materials from any of the known fatty acids, their esters and fats and oils from which they are obtained.

In an initial step in the method of the invention, the fatty acid, fatty ester, fat or fatty oil containing the undesirable unsaponified neutral compounds is adjusted to place the component fatty acid, fatty ester, fat or fatty oil in a solid form while the unsaponified neutral compound is left in or made into a liquid form. In most cases, this may be carried out by adjusting the contaminated mixture to a temperature at which the fatty acid, fatty ester, fat or fatty oil solidifies but not such a low temperature that the unsaponified neutral materials will precipitate or solidify. Those skilled in the art will appreciate that the desired solidification temperature will vary depending on the particular fatty acid, fatty ester, fatty oil or fat being purified. In the absence of a textbook reference to such temperatures (most are known) those skilled in the art can determine optimum solidification temperatures by trial and error technique.

- 4 -

The adjusted mixture will generally be a 2-phase mixture or slurry of the solidified fatty acid, fatty ester, fat or fatty oil in the liquid form of the undesired unsaponifiable neutral materials. In the next step of the method of the invention, this adjusted mixture or slurry is expressed to separate the solid phase from the liquid phase. For this purpose, any conventionally employed variable chamber filtering apparatus may be employed. Preferably, the tube type of press filter is used.

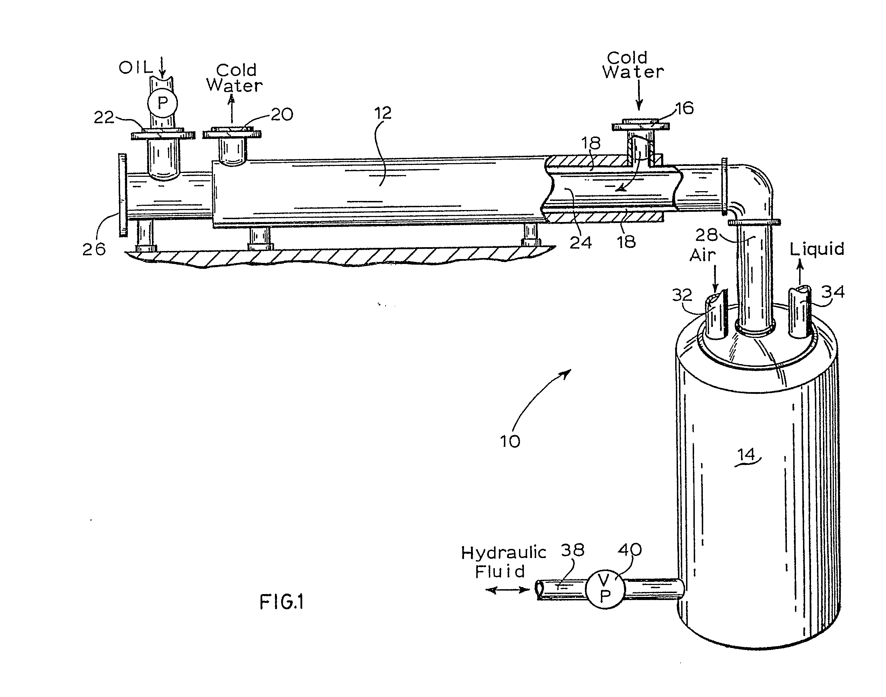

Referring now to the drawings of the accompanying Figures 1-6, the method of the invention will be described in greater detail.

Figure 1 is a view in perspective of preferred apparatus for use in carrying out the method of the invention. The apparatus 10 comprises a scraped surface heat exchanger 12 connected to a tube-type press filter 14. The scraped surface heat exchanger 12 includes an inlet 16 for chilled water entering the chamber 18 formed by the outer jacket of the heat exchanger 12. The chilled water exits through outlet 20. The fatty acid or like material for purification enters inlet 22 and flows countercurrently to the chilled water through inner tube 24. During its passage through the conduit 24, a motor means (not shown in Figure 1) on end 26 continuously drives a scraper means within conduit 24 for removing crystallized fatty acid or like materials from the inner walls of conduit 24, chilled by the passage of the chilled water within chamber 18. The crystallized or solidified fatty acid etc. passes from the heat exchanger 12 via conduit 28 into the press filter 14. The press filter 14 includes a pump means 30 for pumping the crystalline, prefilt material from heat exchanger 12 into the press filter 14. Conduits 32 are provided for introducing compressed air into the press filter 14 as will be described more fully hereinafter. A conduit 34 also permits carrying away of filtrate from the press filter 14 as will be described more completely hereinafter. At the lower end of press filter 14, a conduit 38 with an associated pump 40 functions as a means to introduce and remove from the press filter 14 hydraulic fluid required for operation of the tube type press filter 14.

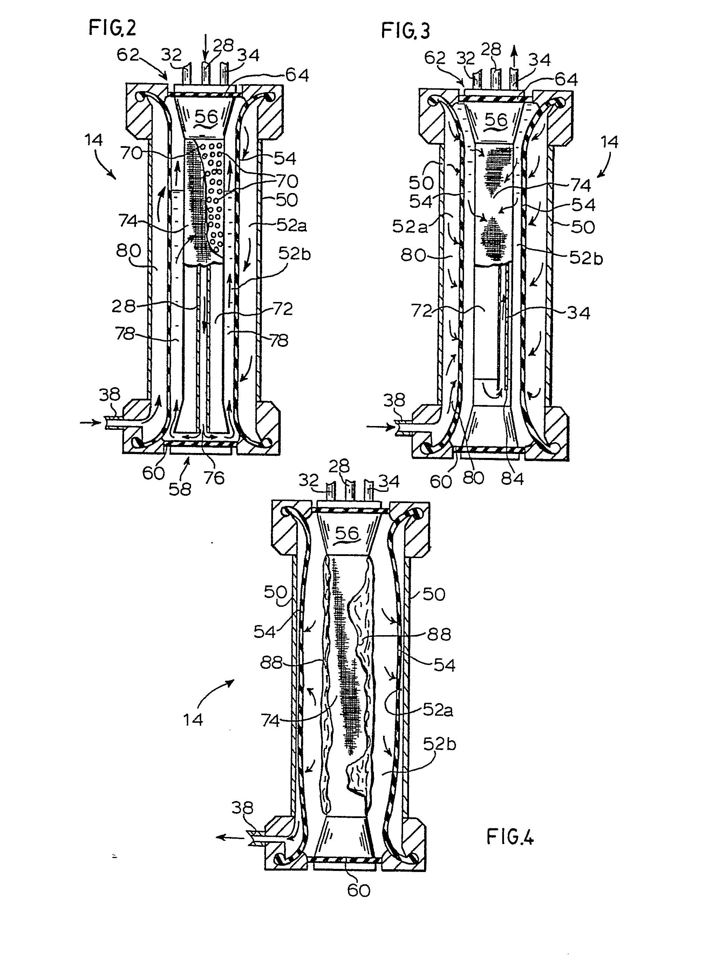

Figure 2 is a cross-sectional, side elevation of the press filter 14 showing structural details and an initial step in its operation. As shown in Figure 2, the press filter 14 consists of an outer cylinder 50 which defines an inner bore made up of chambers 52A and 52B. A flexible, elastic, bladder 54 is mounted within the bore of cylinder 50 so as to divide the bore into the two chambers 52A and 52B. The flexible bladder is preferably made of nitrile rubber as other materials of construction such as natural rubber, butyl rubber and neoprene were shown to be unsatisfactory in the processing of fatty acids, fats, fatty esters, or fatty oils.

Positioned within the chamber 52B is a movable filter member 56 which closes end 58 of cylinder 50 through its cooperation with seal 60. The opposite end 62 of cylinder 50 is closed by the filter member 56 in association with the seal 64. The filter member 56 comprises a tube 68 bearing on its surface a plurality of apertures 70 giving access to the interior hollow or chamber
72.  The outer surface of the tube 68 is covered with a filter
cloth 74 which is preferably a 5 to 10 micron Dacron cloth filter
although any filter cloth may be used which will permit passage
of the fluid portion of the prefilt to be separated, but will not
permit passage of the solids.

As shown also in the Figure 2, the conduit 28 which serves
to deliver the prefilt from heat exchanger 12 traverses the
interior chamber 72 of tube 68 and terminates at its end 76.  As
shown by the arrows in Figure 2, the pumpable prefilt 78 exits
from end 76 of the conduit 28 and fills the chamber 52B within
the bore of the cylinder 50.  When the chamber 52B is filled with
prefilt 78, the pump 30 is de-energized and closes the conduit
28.  Hydraulic fluid is then directed into the press filter 14
through conduit 38 and into the sealed off chamber 52A of the
bore of cylinder 50.  The pressure exerted by the incoming
hydraulic fluid 80 exerts pressure upon the bladder 54 and that
pressure is transmitted to the prefilt 78, forcing the liquid
portion thereof through filter cloth 74 and the apertures 70 so
that the liquid component of the prefilt 78 appears as filtrate
within the chamber 72 of press filter 14.  The solid portion,
i.e.; the fatty acid etc. component of the prefilt 78 is retained
on the surface of the filter cloth 74 as a residue or solid
extract.

Figure 3 is a view as shown in Figure 2 of the press filter
14, in the final stages of expression.  The filtrate 86 is now shown clearly in the chamber 72 as the bladder member 54 moves inwardly towards the filter member 56. The conduit 34 is open and the filtrate 86 is being pumped upwardly through the open end 84 of the conduit 34 for collection in an exterior collector means (not shown in Figure 3).

Figure 4 is a view of the filter press 14 as shown in Figures 1 and 2 but in the next sequence of operation wherein the hydraulic fluid 80 is being pumped out of the chamber 52A through conduit 38 to return the bladder 54 to its initial position. Left on the surface of filter cloth 74 is the solid product 88.

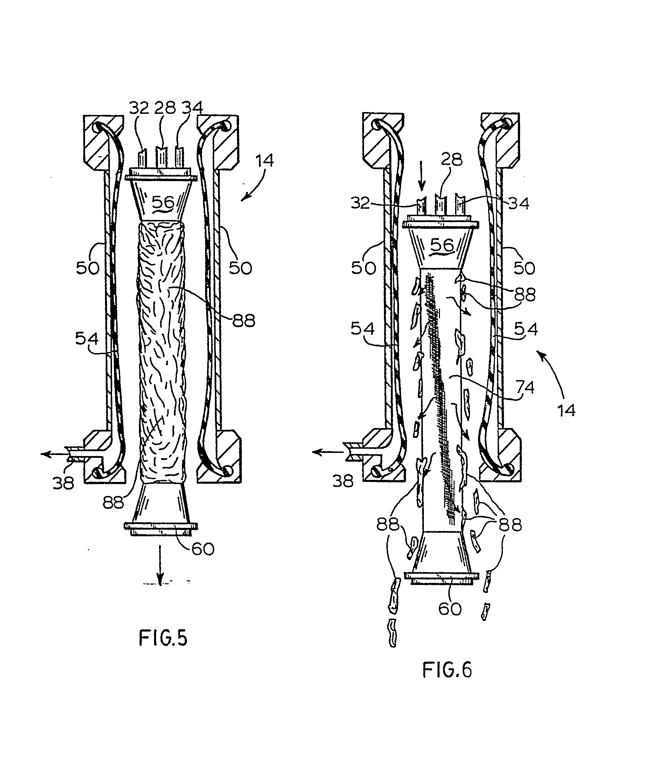

Figure 5 is a cross-sectional, side elevation of the press filter 14 as shown in Figures 2-4, above. In the Figure 5, it will be observed that the end 58 of press filter 14 has been opened by the downward movement of the filter member 56. The press filter 14 is opened for removal of the solid extract 88. Removal of the solid extract 88 is accomplished as shown in Figure 6, a view as in Figure 5 but after the introduction of compressed air into the chamber 72 of the filter member 56. Compressed air is introduced into the chamber 72 through the open conduit 32. Following removal of the solid extract 88, the filter member 56 may be returned to its initial position as shown in Figure 2 and the cycle of expression repeated a plurality of times.

The following examples describe the manner and process of making and using the invention and set forth the best mode contemplated by the inventor for carrying out the invention but are not to be construed as limiting.  All parts and percentages are by weight unless otherwise stated.

EXAMPLE 1

Nine gallons of a heads fraction from a crude tall oil distillation are cooled to a temperature of 75°F and the resulting prefilt fed into a tube filter press as described above.  The feed had an acid number of 136 and contained 32.4% unsaponifiable neutrals.  The prefilt is expressed at 300 psig and the filtrate separated.  The resulting solid extract contains 83.6% saturated fatty acids, 6.7% unsaponifiables and has an acid number of 196.

EXAMPLE 2

The process of Example 1 is repeated except the expression is carried out at 1,000 psig and results in a solid extract of 86.6% saturated acids and 4.5% unsaponifiables having an acid number of 205.

EXAMPLE 3

Twelve gallons of a heads fraction from crude tall oil distillation is cooled to a temperature of 70°F and the resulting prefilt is fed into a tube filter press as described above.  The feed has an acid number of 140 and 29.8% unsaponifiable neutrals. The prefilt is expressed at 500 psig and the filtrate separated. The residue solid extract contains 82.5% saturated fatty acids and 5.1% unsaponifiables and has an acid number of 204.

EXAMPLE 4

The process of Example 3 is repeated except the pressing is carried out at 600 psig and results in a solid extract having 74.4% saturated fatty acids, 8.6% unsaponifiables and an acid number of 196.

EXAMPLE 5

The process of Example 3 is repeated except the expression is carried out at 800 psig and results in a solid extract having 74.8% saturated fatty acids, 7.7% unsaponifiables and an acid number of 198.

EXAMPLE 6

The process of Example 3 is repeated except the expression is carried out at 1,000 psig and results in a solid extract having 78.5% saturated fatty acids, 6.1% unsaponifiables and an acid number of 202.

EXAMPLE 7

Twelve gallons of a tallow fatty acid fraction containing 1% unsaponifiable neutrals and 55% saturated fatty acids are cooled to a temperature of 70°F and the resulting prefilt is fed into a tube filter press as described above. The prefilt is expressed at 300 psig and results in a solid extract having 78.7% saturated fatty acids, 0.4% unsaponifiables and an acid number of 200.

EXAMPLE 8

The process of Example 7 is repeated except the expression is carried out at 500 psig and results in a solid extract having 81.4% saturated fatty acids, 0.3% unsaponifiables and an acid number of 201.

EXAMPLE 9

The process of Example 7 is repeated except the expression is carried out at 700 psig and results in a solid extract having 81.8% saturated fatty acids, 0.2% unsaponifiables and an acid number of 20.

EXAMPLE 10

The process of Example 7 is repeated except the expression is carried out at 1,000 psig and results in a solid extract having 81.6% saturated fatty acids, 0.2% unsaponifiables and an acid number of 201.

EXAMPLE 11

A quantity of a heads fraction from a fractional distillation of tall oil is cooled to a temperature of about 75°F. The resulting prefilt is fed into a tube filter press as described above. The prefilt is pressed at 300 psig and the filtrate separated. The residual solid extract is analyzed and the analytical results are shown in TABLE I, below along with an analysis of the heads fraction from which it was expressed.

EXAMPLE 12

The procedure of Example 11, supra, is repeated except that the expression was under a pressure of 1,000 psig. The analytical results are shown in TABLE I, below.

TABLE I

| Analysis | Feedstock | Example 11 | | Example 12 | |
|---|---|---|---|---|---|
| | | Cake | Filtrate | Cake | Filtrate |
| Light ends | 0.5 | 0.1 | 0.5 | 0.1 | 0.6 |
| Myristic | 1.0 | 0.8 | 1.0 | 0.8 | 1.1 |
| Myristoleic & C-15s | 2.3 | 1.7 | 2.4 | 1.6 | 2.5 |
| Palmitic | 24.8 | 81.5 | 14.7 | 84.6 | 12.6 |
| Palmitoleic | 4.7 | 3.6 | 5.2 | 2.8 | 5.3 |
| C-17s | 0.8 | 1.9 | 0.8 | 1.6 | 0.8 |
| Stearic | 0.6 | 1.3 | 0.5 | 1.2 | 0.5 |
| Oleic | 16.8 | 4.3 | 19.2 | 3.4 | 19.8 |
| C-19s | 0.5 | --- | 0.5 | --- | 0.6 |
| Linoleic | 13.2 | 3.0 | 15.1 | 2.3 | 15.6 |
| Lo. Isomer | 1.3 | 0.3 | 1.5 | 0.2 | 1.6 |
| Unsaponifiables | 32.4 | 6.7 | 37.4 | 4.5 | 37.9 |
| Acid Number | 136 | 196 | 125 | 205 | 123 |
| Iodine Number | --- | --- | --- | --- | --- |

The analytical results shown in TABLE I show that a superior quality fatty acid (Palmitic) is produced through high pressure expression (84.6% Palmitic acid and 4.5% unsaponifiables at 1,000 psi) of a 2-phase prefilt wherein the solid phase is the fatty acid portion and the unsaponifiables are in the liquid portion. A wide range of pressures may be used in the expression step, i.e.; on the order of from about 100 to 3,000 psig.

WHAT IS CLAIMED:

1.  A method of separating unsaponifiable neutral contaminants from fatty acids, fats, fatty oils or fatty esters, which comprises;

adjusting the contaminant containing fatty acid, fat, fatty oil or fatty ester to a temperature at which the contaminant is a liquid and the fatty acid, fat, fatty oil or fatty ester is in a solid form; and

expressing the resulting two phase mixture;

whereby the contaminants are separated in the filtrate and the purified fatty acid, fat, fatty oil or fatty ester is obtained in the filtration residue or solid extract.

2.  The method of claim 1 wherein adjusting is by cooling.

3.  The method of claim 1 wherein in expressing a nitrile rubber bladder is used.

FIG.1

83109192.1

FIG.2

FIG.3

FIG.4

FIG.5

FIG.6